# EUROPEAN PATENT SPECIFICATION

(11) **EP 1 902 585 B1**
(45) Date of publication and mention of the grant of the patent: **19.09.2012**
(21) Application number: 06764548.1
(22) Date of filing: 05.07.2006
(51) Int. Cl.: H04N 7/26

(54) **CODING DEPENDENCY INDICATION IN SCALABLE VIDEO CODING**
CODIERUNGSABHÄNGIGKEITSINDIKATION BEI DER SKALIERBAREN VIDEOCODIERUNG
INDICATION DE LA DEPENDANCE DE CODAGE DANS UN CODAGE VIDEO MODIFIABLE

(30) Priority: 13.07.2005 US 181690
(43) Date of publication of application: 26.03.2008
(73) Proprietor: Nokia Corporation, 02150 Espoo (FI)
(72) Inventor: WANG, Ye-Kui, 33710 Tampere (FI); BAO, Yiliang, San Diego, CA 92130 (US)
(74) Representative: Pursiainen, Timo Pekka
(86) International application number: PCT/FI2006/050314
(87) International publication number: WO 2007/006855

(56) References cited:
- US-A1- 2003 165 274
- Y-K WANG ET AL: "Scalability information SEI for SVC", ITU STUDY GROUP 16 - VIDEO CODING EXPERTS GROUP -ISO/IEC MPEG & ITU-T VCEG(ISO/IEC JTC1/SC29/WG11 AND ITU-T SG16 Q6), XX, XX, no. JVT-O012, 14 April 2005 (2005-04-14), XP030005960,
- WANG Y.-K. AND BAO YILIANG: 'Indication of non-required pictures' JOINT VIDEO TEAM (JVT) OF ISO/IEC MPEG & ITU-T VCEG 16TH MEETING POZNAN, POLAND 24 July 2005 - 29 July 2005, XP008124321
- SULLIVAN G.J., TOPIWALA P., LUTHRA A.: 'The H.264/ AVC advanced video coding standard: Overview and introduction to the fidelity range extensions' PROC. SPIE CONF. APPLICATIONS OF DIGITAL IMAGE PROCESSING vol. XXVII, August 2004, pages 454 - 474, XP003005170

## Description

### Field of the invention

The present invention relates to scalable video coding, and more particularly to indicating coding dependencies in scalable video coding.

### Background of the invention

Some video coding systems employ scalable coding in which some elements or element groups of a video sequence can be removed without affecting the reconstruction of other parts of the video sequence. Scalable video coding is a desirable feature for many multimedia applications and services used in systems employing decoders with a wide range of processing power. Scalable bit streams can be used, for example, for rate adaptation of pre-encoded unicast streams in a streaming server and for transmission of a single bit stream to terminals having different capabilities and/or with different network conditions.

Scalability is typically implemented by grouping the image frames into a number of hierarchical layers. The image frames coded into the image frames of the base layer substantially comprise only the ones that are compulsory for the decoding of the video information at the receiving end. One or more enhancement layers can be determined above the base layer, each one of the layers improving the quality of the decoded video in comparison with a lower layer. However, a meaningful decoded representation can be produced by decoding only certain parts of a scalable bit stream.

An enhancement layer may enhance the temporal resolution (i.e. the frame rate), the spatial resolution, or just the quality. In some cases, data of an enhancement layer can be truncated after a certain location, even at arbitrary positions, whereby each truncation position with some additional data represents increasingly enhanced visual quality. Such scalability is called fine-grained (granularity) scalability (FGS). In contrast to FGS, the scalability provided by a quality enhancement layer not providing fine-grained scalability is called coarse-grained scalability (CGS).

One of the current development projects in the field of scalable video coding is the Scalable Video Coding (SVC) standard, which will later become the scalable extension to ITU-T H.264 video coding standard (also know as ISO/IEC MPEG-4 AVC). According to the SVC standard draft, a coded picture in a spatial or CGS enhancement layer includes an indication of the inter-layer prediction basis. The inter-layer prediction includes prediction of one or more of the following three parameters: coding mode, motion information and sample residual. Use of inter-layer prediction can significantly improve the coding efficiency of enhancement layers. Inter-layer prediction always comes from lower layers, i.e. a higher layer is never required in decoding of a lower layer.

In a scalable video bitstream, for an enhancement layer picture a picture from whichever lower layer may be selected for inter-layer prediction. Accordingly, if the video stream includes multiple scalable layers, it may include pictures on intermediate layers, which are not needed in decoding and playback of an entire upper layer. Such pictures are referred to as non-required pictures (for decoding of the entire upper layer).

However, the prior-art scalable video methods have the serious disadvantage that there are no means to indicate such dependency information before decoding of the non-required pictures. Consequently, the decoder has to decode the non-required pictures, which is wasteful in terms of computational load, and has to buffer the corresponding decoded pictures, which is wasteful in terms of memory consumption. Alternatively, if the non-required picture at a particular temporal location is a non-reference picture, the decoder can wait for the arrival of the picture at that temporal location in the scalable layer desired for playback and then parse the dependency information. However, this causes increased end-to-end delay, which is not acceptable for real-time visual applications.

### Summary of the invention

Now there is invented an improved method and technical equipment implementing the method, by which the non-required pictures can be indicated to the decoder prior to their decoding. Various aspects of the invention include an encoding and a decoding method, an encoder, a decoder, a video encoding device, a video decoding device, computer programs for performing the encoding and the decoding, and a data structure, which aspects are characterized by what is stated below. Various embodiments of the invention are disclosed.

According to a first aspect, a method according to the invention is based on the idea of encoding a scalable video data stream, which comprises a base layer and at least one enhancement layer, wherein a scalable video data stream, which includes at least one non-required picture in a temporal location of a layer wherein decoding of pictures in an upper layer at and succeeding the said temporal location in decoding order does not require said non-required picture, and indication information of the at least one non-required picture is signalled in the scalable video data stream, the indication information indicating that the at least one non-required picture is not required for decoding of pictures in an upper layer at and succeeding the said temporal location in decoding order.

According to an embodiment, the one or more enhancement layers comprise one or more spatial, quality, or fine granularity scalability (FGS) enhancement layers.

According to an embodiment, said signalling is performed within a portion of said scalable data stream.

According to an embodiment, said signalling is performed in a Supplemental Enhancement Information (SEI) message.

According to a second aspect, there is provided a method of decoding a scalable video data stream comprising a base layer and at least one enhancement layer, the method comprising: decoding indication information received with a scalable video data stream, said indication information including information about at least one non-required picture in a temporal location of a layer and indicating that the at least one non-required picture is not required for decoding of pictures in an upper layer at and succeeding the said temporal location in decoding order; and decoding pictures in a layer above the non-required picture at and succeeding the said temporal location in decoding order without decoding said non-required picture.

The arrangement according to the invention provides significant advantages. The indication information of the non-required pictures, which is signalled in connection with the scalable video stream, enables the decoder to determine the non-required pictures prior to decoding, whereby any unnecessary decoding and buffering of the non-required pictures is avoided. This decreases the computational load and memory consumption of the decoding process. Furthermore, the arrangement according to the invention enables maintenance of a minimum end-to-end delay.

The further aspects of the invention include various apparatuses arranged to carry out the inventive steps of the above methods.

### Brief Description of the Drawings

In the following, various embodiments of the invention will be described in more detail with reference to the appended drawings, in which
- Fig. 1: shows the conceptual structure of the H.264 design;
- Fig. 2: shows an example of coding dependency hierarchy of a scalable video stream;
- Fig. 3: shows another example of coding dependency hierarchy of a scalable video stream;
- Fig. 4: shows an example of coding dependency hierarchy of a scalable video stream where FGS layers are involved;
- Fig. 5: shows an example of coding dependency hierarchy of a scalable video stream as a variation of the dependency hierarchy of Fig. 4;
- Fig. 6: shows yet another example of coding dependency hierarchy of a scalable video stream;
- Fig. 7: shows an encoding device according to an embodiment in a simplified block diagram;
- Fig. 8: shows a decoding device according to an embodiment in a simplified block diagram;
- Fig. 9: shows a block diagram of a mobile communication device according to a preferred embodiment; and
- Fig. 10: shows a video communication system, wherein the invention is applicable.

### Detailed Description of the Invention

The invention is applicable to all video coding methods using scalable video coding. Video coding standards include ITU-T H.261, ISO/IEC MPEG-1 Visual, ITU-T H.262 or ISO/IEC MPEG-2 Visual, ITU-T H.263, ISO/IEC MPEG-4 Visual and ITU-T H.264 (also known as ISO/IEC MPEG-4 AVC). In addition, there are efforts working towards new video coding standards. One is the development of the scalable video coding (SVC) standard, which will become the scalable extension to H.264/AVC. The SVC standard is currently being developed under the JVT, the joint video team formed by ITU-T VCEG and ISO/IEC MPEG. The second effort is the development of China video coding standards organized by the China Audio Visual coding Standard Work Group (AVS).

The following is an exemplary illustration of the invention using the H.264 video coding as an example. The H.264 coding will be described to a level of detail considered satisfactory for understanding the invention and its preferred embodiments. For a more detailed description of the implementation of H.264, reference is made to the H.264 standard, the latest specification of which is described in JVT-N050d1, "Draft of Version 4 of H.264/AVC," 14th JVT meeting, Hong Kong, China, 18-21 Jan., 2005.

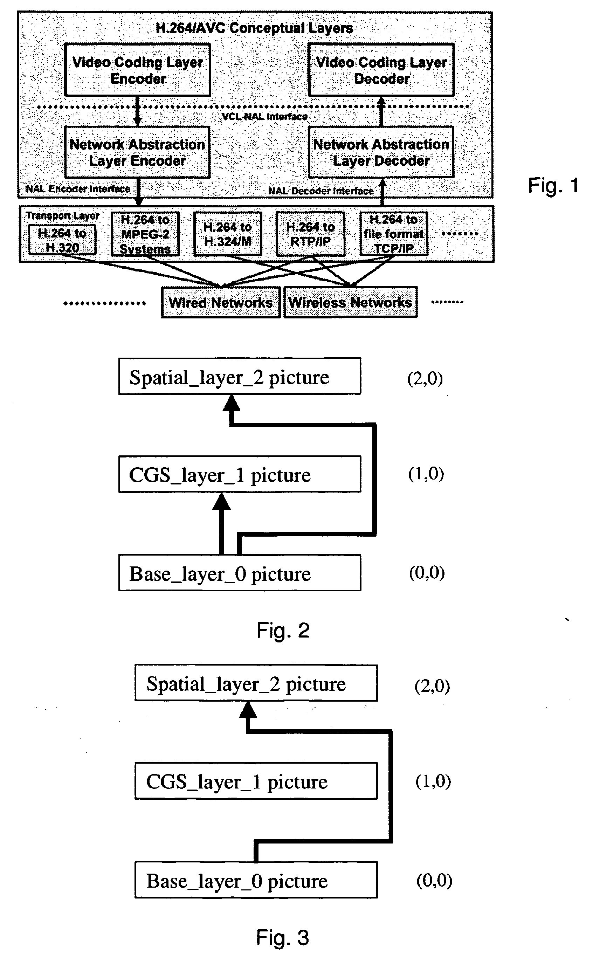

According to Fig.1, H.264/AVC distinguishes between two different conceptual layers, the video coding layer (VCL) and the network abstraction layer (NAL). Both the VCL and the NAL are part of the H.264/AVC standard. The VCL specifies an efficient representation for the coded video signal. The NAL of H.264/AVC defines the interface between the video codec itself and the outside world. It operates on NAL units, which give support for the packet-based approach of most existing networks. At the NAL decoder interface, it is assumed that the NAL units are delivered in decoding order and that packets are either received correctly, are lost, or an error flag in the NAL unit header can be raised if the payload contains bit errors. The latter feature is not part of the standard as the flag can be used for different purposes. However, it provides a way to signal an error indication through the entire network. Additionally, interface specifications are required for different transport protocols that will be specified by the responsible standardization bodies. The exact transport and encapsulation of NAL units for different transport systems, such as H.320, MPEG2 Systems, and RTP/I P, are also outside the scope of the H.264/AVC standardization. The NAL decoder interface is normatively defined in the standard, whereas the interface between the VCL and the NAL is conceptual and helps in describing and separating the tasks of the VCL and the NAL.

The working draft of the scalable extension (SVC) to H.264/AVC currently enables coding of multiple scalable layers. The latest draft is described in JVT-O202 Annex S, "Scalable video coding - working draft 2," 15th JVT meeting, Busan, South Korea, April 2005. In this coding of multiple scalable layers, the variable dependency_id signaled in the bitstream is used to indicate the coding dependencies of different scalable layers.

A scalable bit stream contains at least two scalability layers, the base layer and one or more enhancement layers. If one scalable bit stream contains a plurality of scalability layers, it then has the same number of alternatives for decoding and playback. Each layer is a decoding alternative. Layer 0, the base layer, is the first decoding alternative. Layer 1, the first enhancement layer, is the second decoding alternative, etc. This pattern continues with subsequent layers. Typically, a lower layer is contained in the higher layers. For example, layer 0 is contained in layer 1, and layer 1 is contained in layer 2.

A picture in a lower layer may not necessarily be needed in decoding and playback of an entire upper layer. Such pictures are called non-required pictures (for decoding of the entire upper layer).

A significant drawback in the SVC coding, as well as in other scalable video coding methods, is that there are no means to indicate the non-required pictures to the decoder before the non-required pictures are decoded. Decoding of the non-required pictures causes unnecessary computational load, and buffering the non-required decoded pictures reserves memory space needlessly. The dependency_id variable signaled in the bitstream is only used to indicate the coding dependencies of different scalable layers, but not the non-required pictures. The dependency_id variable can only be utilized in determining the non-required picture in such a situation, wherein the decoder waits for the arrival of the picture at a particular temporal location in the scalable layer, which is selected for playback, and then the decoder obtains the dependency information included in the dependency_id variable after the dependency_id variable has been parsed and decoded. However, this causes a considerable end-to-end delay, which is not acceptable for real-time low-latency video applications, such as video telephony or video conferencing.

Now according to an aspect of the invention, a scalable video stream comprising at least two layers is formed, whereby an indication of non-required pictures, which are not needed for decoding of at least one layer, is created. The indication information of the non-required pictures is signalled in connection with the scalable video stream such that the decoder can determine the non-required pictures prior to their decoding and thus avoid decoding and buffering of the non-required pictures.

The indication information of the non-required pictures can be signalled in the bit stream of the scalable video stream. The H.264/AVC standard includes a signalling mechanism called Supplemental Enhancement Information (SEI) for assisting in the decoding and displaying of the video sequence. SEI messages are transferred synchronously with the video data content. A plurality of SEI messages are defined in the Annex D of the H.264/AVC standard: JVT-N050d1, *"Draft of Version 4 of H.264*/*AVC"*

According to a preferred embodiment, an indication of the non-required picture information is transferred using a new SEI message, wherein new fields are defined for the indication of the non-required picture information.

According to a preferred embodiment, the information of non-required pictures is conveyed in a SEI message according to the following syntax and semantics:

### Inter-layer dependency information SEI message syntax

| inter_layer_dependency_info(payloadSize){ | **C** | **Descriptor** |
|---|---|---|
| **num_info_entries_minus1** | 5 | ue(v) |
| for ( i = 0; i <= num_info_entries_minus1; i++ ) { | | |
| **entry_dependency_id[ i ]** | 5 | u(3) |
| **num_non_required_pics_minus1[ i ]** | 5 | ue(v) |
| for (j = 0; j <= num_non_required_pics_minus1[ i ]; j++) { | | |
| **non_required_pic_dependency_id[** i **][** j **]** | 5 | u(3) |
| **non_required_pic_quality_level**[ i ][ j ] | 5 | u(2) |
| } | | |
| } | | |
| } | | |

The information conveyed in this SEI message concerns an access unit, which includes the coded slices and coded sliced data partitions of all the scalable layers at the same temporal location. When present, this SEI message shall appear before any coded slice NAL unit or coded slice data partition NAL unit of the corresponding access unit. The semantics of this SEI message are as follows:
*num_info_entries_minus1* plus 1 indicates the number of the following information entries.
*entry_dependency_id[ i ]* indicates the dependency_id value of the target picture whose information of non-required pictures is described by the following syntax elements. The quality_level value of the target picture is always zero. This is due to the fact that a picture having quality_level larger than 0 is a FGS picture whose inter-prediction reference source is always fixed. Therefore, the information of non-required pictures is the same as the picture having the same dependency_id value as the FGS picture and quality_level equal to 0. A non-required picture of the target picture is also not required in decoding of any other pictures in the coded video sequence and having the same dependency_id value and quality_level value as the target picture.
*num_non_required_pics_minus1[ i ]* plus 1 indicates the number of explicitly signalled non-required pictures for the target picture having the dependency_id value equal to entry_dependency_id[ i ] and the quality_level value equal to 0. Besides explicitly signalled non-required pictures, there may also be additional non-required pictures derived as specified in below.
*non_required_pic_dependency_id[ i ][ j ]* indicates the dependency_id value of the j-th non-required picture explicitly signalled for the target picture having the dependency_id value equal to entry_dependency_id[ i ] and the quality_level value equal to 0.
*non_required_pic_quality_level[ i ][ j ]* indicates the quality_level value of the j-th non-required picture explicitly signalled for the target picture having the dependency_id value equal to entry_dependency_id[ i ] and the quality_level value equal to 0. In addition, those pictures that have dependency_id equal to non_required_pic_dependency_id[ i ][ j ] and quality_level larger than non_required_pic_quality_level[ i ][ j] are also non-required pictures for the same target picture.

The implementation of the above SEI message and semantics is further illustrated with the following examples. Let us first suppose that a video stream comprises three layers, base_layer_0, CGS_layer_1, and spatial_layer_2, and they have the same frame rate. The inter-layer prediction dependency hierarchy is shown in Fig. 2, wherein an arrow indicates that the pointed-to object uses the pointed-from object for inter-layer prediction reference, and the pair of values in the right of each layer in the figure represents the values of dependency_id and quality_level. In this example, a picture on the CGS_layer_1 uses the base_layer_0 for inter-layer prediction. Furthermore, a picture in spatial_layer_2 uses base_layer_0 (i.e. not the CGS_layer_1 next to it) for inter-layer prediction. Accordingly, the CGS_layer_1 picture (dependency_id=1, quality_level=0) is a non-required picture for decoding the spatial_layer_2 picture.

Then, assuming that the shown CGS_layer_1 picture is also not needed in decoding of any of the spatial_layer_2 pictures succeeding the shown spatial_layer_2 picture in decoding order, according to the above SEI syntax and semantics, the signalled values for the example of Fig. 2 would be:

```
 num_info_entries_minus1 = 0
 {
 entry_dependency id [0] = 2
 num_non_required_pics_minus1[0] = 0
 {
 non_required_pic_dependency_id[ 0 ][ 0 ] = 1
 non_required_pic_quality level[ 0 ][ 0 ] = 0
 }
 }
```

Further, it is possible that a picture in spatial_layer_2 uses base_layer_0 for inter-layer prediction, while at the same temporal location, the picture in CGS_layer_1 uses no inter-layer prediction at all, as shown in the dependency hierarchy of Fig.3. Accordingly, the CGS_layer_1 picture (dependency_id=1, quality_level=0) is a non-required picture for decoding the spatial_layer_2 picture, and the base_layer_0 picture (dependency_id=0, quality_level=0) is a non-required picture for decoding the CGS_layer_1 picture.

Again, assuming that the shown CGS_layer_1 picture is not needed in decoding of any of the spatial_layer_2 pictures succeeding the shown spatial_layer_2 picture in decoding order, and that shown base_layer_0 picture is also not needed in decoding of any of the CGS_layer_1 pictures succeeding the shown CGS_layer_1 picture in decoding order, the signalled values for the example of Fig. 3 would be:

```
 num_info_entries_minus1 = 1
 {
 entry_dependency_id[0] = 1
 num_non_required_pics_minus1[0] = 0
 {
 non_required_pic_dependency_id[0][0] = 0
 non_required_pic_quality_level[0][0] = 0
 }
 entry_dependency_id[0] = 2
 num_non_required_pics_minus1[0] = 0
 {
 non_required_pic_dependency_id[0][0] = 1
 non_required_pic_quality_level[0][0] = 0
 }
 }
```

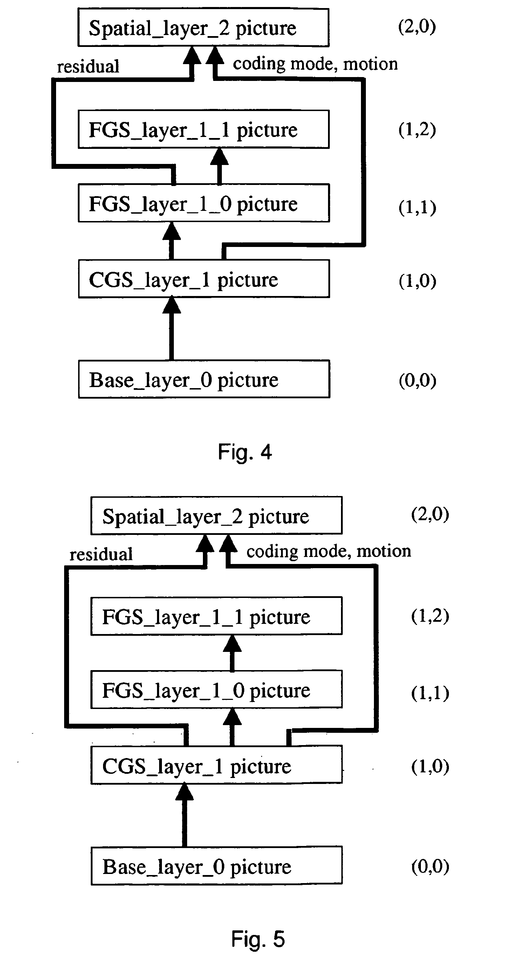

When FGS layers are involved, the inter-layer prediction for the coding mode and the motion information may come from a different base layer than the inter-layer prediction for sample residual. An example of this is shown in Fig. 4, wherein for the spatial_layer_2 picture, the inter-layer prediction for the coding mode and the motion information comes from the CGS_layer_1 picture, while the inter-layer prediction for the sample residual comes from the FGS_layer_1_0 picture. Accordingly, the FGS_layer_1_1 picture (dependency_id=1, quality_level=2) is a non-required picture for decoding the spatial_layer_2 picture. Again, assuming that the shown FGS_layer_1_1 picture is also not needed in decoding of any of the spatial_layer_2 pictures succeeding the shown spatial_layer_2 picture in decoding order, the signalled values for the example of Fig. 4 would be:

```
 num_info_entries_minus1 = 0
 {
 entry_dependency_id[0] = 2
 num_non_required_pics_minus1[0] = 0
 {
 non_required_pic_dependency_id[0][0] = 1
 non_required_pic_quality_level[0][0] = 2
 }
 }
```

Fig. 5 illustrates a variation of the dependency hierarchy of Fig. 4. Herein, all aspects of the inter-layer prediction, i.e. the coding mode, the motion information and the sample residual, for the spatial_layer_2 picture come from the CGS_layer_1 picture. Accordingly, both the FGS_layer_1_0 picture (dependency_id=1, quality_level=1) and the FGS_layer_1_1 picture (dependency_id=1, quality_level=2) are non-required pictures for decoding the spatial_layer_2 picture. Again, assuming that neither the FGS_layer_1_0 picture nor the FGS_layer_1_1 picture is needed in decoding of any of the spatial_layer_2 pictures succeeding the shown spatial_layer_2 picture in decoding order, the signalled values for the example of Fig. 5 would be:

```
 num_info_entries_minus1 =0
 {
 entry_dependency_id [0] = 2
 num_non_required_pics_minus1[0] = 0
 {
 non_required_pic_dependency id[0][0] = 1
 non_required_pic_quality_level[0][0] = 1
 }
 }
```

Note that herein it is only required to indicate the FGS_layer_1_0 picture (dependency_id=1, quality_level=1) as a non-required picture, since the FGS_layer_1_1 picture is dependent only on the FGS_layer_1_0 picture, whereby the FGS_layer_1_1 picture is evidently also a non-required picture.

For the interpretation of the semantics of the SEI message defined above, there are some further situations, which have to be taken into account. If the layer desired for playback has dependency_id = 'A' that is not equal to any of the signalled entry_dependency_id[i] values in the SEI message, then the n^{th} entry_dependency_id[i] having the largest entry_dependency_id[i] but smaller than 'A' is searched for. The picture having dependency_id = 'A' shall have the same non-required pictures as specified in the n^{th} entry. If there is no entry that has entry_dependency_id[i] smaller than 'A', then there are no non-required pictures in the corresponding access unit (i.e. at the temporal location corresponding to the SEI message) for the picture having dependency_id = 'A'.

If a picture having dependency_id = 'A' is not a non-required picture for the picture having dependency_id = `B', wherein 'B' is larger than or equal to 'A', then all the non-required pictures for the picture having dependency_id = 'A' are also non-required pictures for the picture having dependency_id = 'B'.

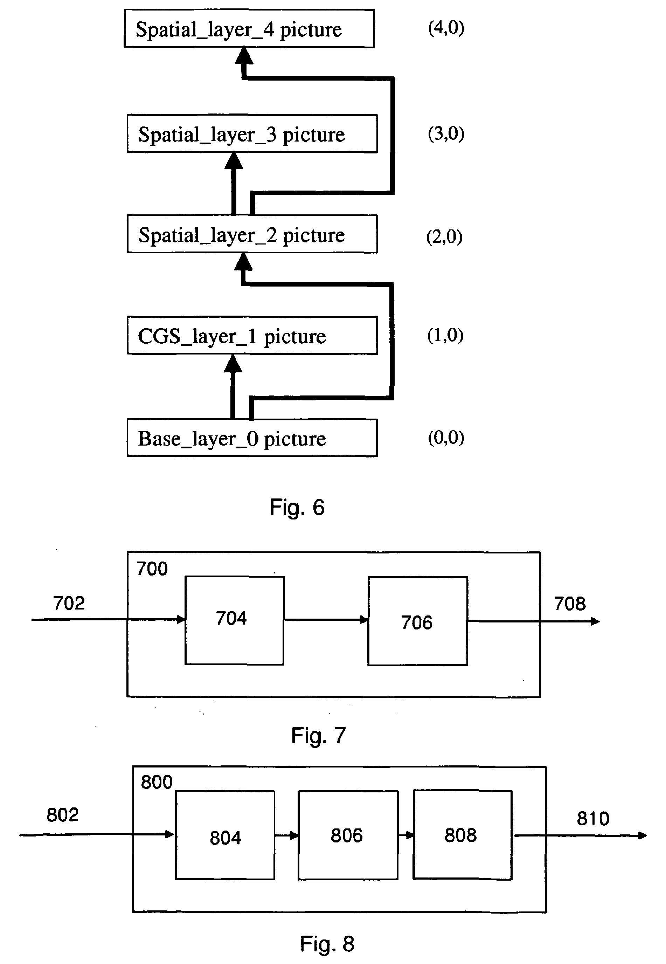

An example is given in Fig. 6, wherein a video stream comprises five layers, base_layer_0, CGS_layer_1, spatial_layer_2, spatial_layer_3 and spatial_layer_4, and they have the same frame rate. A picture on the CGS_layer_1 uses the base_layer_0 for inter-layer prediction. A picture in spatial_layer_2 uses base_layer_0 (i.e. not the CGS_layer_1 next to it) for inter-layer prediction. A picture in spatial_layer_3 uses spatial_layer_2 for inter-layer prediction. Finally, a picture in spatial_layer_4 uses only spatial_layer_2 for inter-layer prediction. Accordingly, the CGS_layer_1 picture (dependency_id=1, quality_level=0) is a non-required picture for decoding the spatial_layer_2 picture, and the spatial_layer_3 picture (dependency_id=3, quality_level=0) is a non-required picture for decoding the spatial_layer_4 picture. According to the above rule, the CGS_layer_1 picture is a non-required picture for decoding the spatial_layer_3 picture and the spatial_layer_4 picture as well, since their dependency_id values (3 and 4) are larger than that of the spatial_layer_2 picture (dependency_id=2) and the spatial_layer_2 picture is not a non-required picture for the spatial_layer_3 picture and the spatial_layer_4 picture.

Again, assuming that the inter-layer dependency relationships in the following access units in decoder order are the same, the signalled values for the example of Fig. 6 would be:

```
 num_info_entries_minusl = 1
 {
 entry_dependency_id[0] = 2
 num_non_required_pics_minus1[0] = 0
 {
 non_required_pic_dependency_id[0][0] = 1
 non_required_pic_quality_level[0][0] = 0
 }
 entry_dependency_id[0] = 4
 num_non_required_pics_minus1 [0] = 0
 {
 non_required_pic_dependency_id[0][0] = 3
 non_required_pic_quality level[0][0] = 0
 }
 }
```

Fig. 7 illustrates an encoding device according to an embodiment, wherein the encoding device 700 receives a raw data stream 702, which is encoded and one or more layers are produced by the scalable data encoder 704 of the encoder 700. The scalable data encoder 704 deduces the non-required pictures while encoding the data stream and inserts the indication information of the non-required pictures to a message forming unit 706, which may be e.g. an access unit composer. The encoded data stream 708 is output from the encoder 700, thus allowing a decoder to determine the non-required pictures prior to their decoding and to avoid unnecessary decoding and buffering of the non-required pictures.

Fig. 8 illustrates a decoding device according to an embodiment, wherein the decoding device 800 receives the encoded data stream 802 via a receiver 804. The indication information of the non-required pictures is extracted from the data stream in a message deforming unit 806, which may be e.g. an access unit decomposer. A decoder 808 then decodes the selected layer of the encoded data stream according to the indication information of the non-required pictures such that the non-required pictures are not decoded or buffered. The decoded data stream 810 is output from the decoder 800.

The different parts of video-based communication systems, particularly terminals, may comprise properties to enable bi-directional transfer of multimedia streams, i.e. transfer and reception of streams. This allows the encoder and decoder to be implemented as a video codec comprising the functionalities of both an encoder and a decoder.

It is to be noted that the functional elements of the invention in the above video encoder, video decoder and terminal can be implemented preferably as software, hardware or a combination of the two. The coding and decoding methods of the invention are particularly well suited to be implemented as computer software comprising computer-readable commands for carrying out the functional steps of the invention. The encoder and decoder can preferably be implemented as a software code stored on storage means and executable by a computer-like device, such as a personal computer (PC) or a mobile station (MS), for achieving the coding/decoding functionalities with said device. Other examples of electronic devices, to which such coding/decoding functionalities can be applied, are personal digital assistant devices (PDAs), set-top boxes for digital television systems, gaming consoles, media players and televisions.

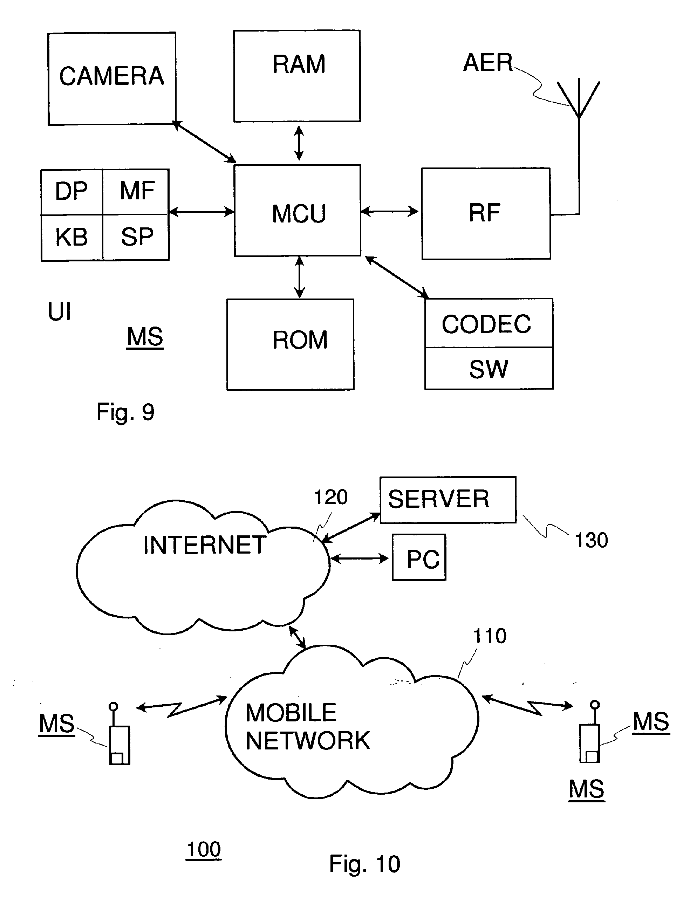

Fig. 9 shows a block diagram of a mobile communication device MS according to the preferred embodiment of the invention. In the mobile communication device, a Master Control Unit MCU controls blocks responsible for the mobile communication device's various functions: a Random Access Memory RAM, a Radio Frequency part RF, a Read Only Memory ROM, video codec CODEC and a User Interface UI. The user interface comprises a keyboard KB, a display DP, a speaker SP and a microphone MF. The MCU is a microprocessor, or in alternative embodiments, some other kind of processor, for example a Digital Signal Processor. Advantageously, the operating instructions of the MCU have been stored previously in the ROM memory. In accordance with its instructions (i.e. a computer program), the MCU uses the RF block for transmitting and receiving data over a radio path via an antenna AER. The video codec may be either hardware based or fully or partly software based, in which case the CODEC comprises computer programs for controlling the MCU to perform video encoding and decoding functions as required. The MCU uses the RAM as its working memory. The mobile communication device can capture motion video by the video camera, encode and packetize the motion video using the MCU, the RAM and CODEC based software. The RF block is then used to exchange encoded video with other parties.

Figure 10 shows video communication system 100 comprising a plurality of mobile communication devices MS, a mobile telecommunications network 110, the Internet 120, a video server 130 and a fixed PC connected to the Internet. The video server has a video encoder and can provide on-demand video streams such as weather forecasts or news.

It should be evident that the present invention is not limited solely to the above-presented embodiments, but it can be modified within the scope of the appended claims.

## Claims

1. A method of encoding a scalable video data stream comprising a base layer and at least one enhancement layer, the method comprising:
encoding a scalable video data stream, which includes at least one non-required picture in a temporal location of a layer wherein decoding of pictures in an upper layer at and succeeding the said temporal location in decoding order does not require said non-required picture; and
signalling indication information of the at least one non-required picture in the scalable video data stream, the indication information indicating that the at least one non-required picture is not required for decoding of pictures in an upper layer at and succeeding the said temporal location in decoding order.

2. The method according to claim 1, wherein the one or more enhancement layers comprise one or more spatial, quality, or fine granularity scalability (FGS) enhancement layers.

3. The method according to claim 1, wherein said signalling is performed within a portion of said scalable data stream.

4. The method according to claim 3, wherein said signalling is performed in a Supplemental Enhancement Information (SEI) message.

5. A method of decoding a scalable video data stream comprising a base layer and at least one enhancement layer, the method comprising:
decoding indication information received with a scalable video data stream, said indication information including information about at least one non-required picture in a temporal location of a layer and indicating that the at least one non-required picture is not required for decoding of pictures in an upper layer at and succeeding the said temporal location in decoding order; and
decoding pictures in a layer above the non-required picture at and succeeding the said temporal location in decoding order without decoding said non-required picture.

6. The method according to claim 5, wherein the one or more enhancement layers comprise one or more spatial, quality, or fine granularity scalability (FGS) enhancement layers.

7. The method according to claim 5, wherein said indication information is received within a portion of said scalable data stream.

8. The method according to claim 7, wherein said indication information is received in a Supplemental Enhancement Information (SEI) message.

9. A video encoder for encoding a scalable video data stream comprising a base layer and at least one enhancement layer, the video encoder comprising:
means for encoding a scalable video data stream, which includes at least one non-required picture in a temporal location of a layer wherein decoding of pictures in an upper layer at and succeeding the said temporal location in decoding order does not require said non-required picture; and
means for including indication information of the at least one non-required picture in the scalable video data stream, the indication information indicating that the at least one non-required picture is not required for decoding of pictures in an upper layer at and succeeding the said temporal location in decoding order.

10. The video encoder according to claim 9, wherein information of the at least one non-required picture is arranged to be signalled within a portion of said scalable data stream.

11. The video encoder according to claim 10, wherein information of the at least one non-required picture is arranged to be signalled in a Supplemental Enhancement Information (SEI) message.

12. A video decoder for decoding a scalable video data stream comprising a base layer and at least one enhancement layer, the video decoder comprising:
means for decoding indication information received with a scalable video data stream, said indication information including information about at least one non-required picture in a temporal location of a layer and indicating that the at least one non-required picture is not required for decoding of pictures in an upper layer at and succeeding the said temporal location in decoding order; and
means for decoding pictures in a layer above the non-required picture at and succeeding the said temporal location in decoding order without decoding said non-required picture.

13. The video decoder according to claim 12, wherein said indication information is arranged to be decoded from a portion of said scalable data stream.

14. The video decoder according to claim 13, wherein said indication information is arranged to be decoded from a Supplemental Enhancement Information (SEI) message.

15. A computer program product, stored on a computer readable medium and executable in a data processing device, for encoding a scalable video data stream comprising a base layer and at least one enhancement layer, the computer program product comprising:
a computer program code section for encoding a scalable video data stream, which includes at least one non-required picture in a temporal location of a layer wherein decoding of pictures in an upper layer at and succeeding the said temporal location in decoding order does not require said non-required picture; and
a computer program code section for including indication information of the at least one non-required picture in the scalable video data stream, the indication information indicating that the at least one non-required picture is not required for decoding of pictures in an upper layer at and succeeding the said temporal location in decoding order.

16. A computer program product, stored on a computer readable medium and executable in a data processing device, for decoding a scalable video data stream comprising a base layer and at least one enhancement layer, the computer program product comprising:
a computer program code section for decoding indication information received with a scalable video data stream, said indication information including information about at least one non-required picture in a temporal location of a layer and indicating that the at least one non-required picture is not required for decoding of pictures in an upper layer at and succeeding the said temporal location in decoding order; and
a computer program code section for decoding pictures in a layer above the non-required picture at and succeeding the said temporal location in decoding order without decoding said non-required picture.

17. A data structure implementing a scalable video data stream comprising:
a base layer of video data;
at least one enhancement layer of video data;
at least one non-required picture in a temporal location of a layer, which non-required picture is not required for decoding of target pictures in an upper layer at and succeeding the said temporal location in decoding order; and
an indication data identifying the at least one non-required picture, the indication data indicating that the at least one non-required picture is not required for decoding of pictures in an upper layer at and succeeding the said temporal location in decoding order.

18. A data structure according to claim 17, wherein said indication data comprises:
a first indication of at least one target picture;
a second indication of at least one non-required picture for said target picture; and
a third indication of a quality level of the at least one non-required picture.

19. A data structure according to claim 17, wherein said indication data is associated with a portion of said scalable data stream as a Supplemental Enhancement Information (SEI) message.

## Patentansprüche

1. Verfahren zum Codieren eines skalierbaren Videodatenstroms, der eine Basisschicht und mindestens eine Anreicherungsschicht umfasst, wobei das Verfahren Folgendes umfasst:
Codieren eines skalierbaren Videodatenstroms, der mindestens ein nicht erforderliches Bild an einem zeitlichen Ort einer Schicht umfasst, wobei das Decodieren von Bildern in einer oberen Schicht an dem zeitlichen Ort und ihm in der Decodierungsreihenfolge nachfolgend das nicht erforderliche Bild nicht erfordert; und
Signalisierungsangabeinformationen des mindestens einen nicht erforderlichen Bilds im skalierbaren Videodatenstrom, wobei die Angabeinformationen angeben, dass das mindestens eine nicht erforderliche Bild für das Decodieren von Bildern in einer oberen Schicht an dem zeitlichen Ort und ihm in der Decodierungsreihenfolge nachfolgend nicht erforderlich ist.

2. Verfahren nach Anspruch 1, wobei die einen oder mehreren Anreicherungsschichten eine oder mehrere räumliche, Qualitäts- oder Fine Granularity Scalability (FGS) Anreicherungsschichten umfassen.

3. Verfahren nach Anspruch 1, wobei die Signalisierung innerhalb eines Abschnitts des skalierbaren Datenstroms durchgeführt wird.

4. Verfahren nach Anspruch 3, wobei die Signalisierung in einer Supplemental Enhancement Information (SEI) Nachricht durchgeführt wird.

5. Verfahren zum Decodieren eines skalierbaren Videodatenstroms, der eine Basisschicht und mindestens eine Anreicherungsschicht umfasst, wobei das Verfahren Folgendes umfasst:
Decodieren von mit einem skalierbaren Videodatenstrom empfangenen Angabeinformationen, wobei die Angabeinformationen Informationen über mindestens ein nicht erforderliches Bild an einem zeitlichen Ort einer Schicht umfassen und angeben, dass das mindestens eine nicht erforderliche Bild für das Decodieren von Bildern in einer oberen Schicht an dem zeitlichen Ort und ihm in der Decodierungsreihenfolge nachfolgend nicht erforderlich ist; und
Decodieren von Bildern in einer Schicht über dem nicht erforderlichen Bild an dem zeitlichen Ort und ihm in der Decodierungsreihenfolge nachfolgend ohne Decodieren des nicht erforderlichen Bilds.

6. Verfahren nach Anspruch 5, wobei die eine oder die mehreren Anreicherungsschichten eine oder mehrere räumliche, Qualitäts- oder Fine Granularity Scalability (FGS) Anreicherungsschichten umfassen.

7. Verfahren nach Anspruch 5, wobei die Angabeinformationen innerhalb eines Abschnitts des skalierbaren Datenstroms empfangen werden.

8. Verfahren nach Anspruch 7, wobei die Angabeinformationen in einer Supplemental Enhancement Information (SEI) Nachricht empfangen werden.

9. Videocodierer zum Codieren eines skalierbaren Videodatenstroms, der eine Basisschicht und mindestens eine Anreicherungsschicht umfasst, wobei der Videocodierer Folgendes umfasst:
Mittel zum Codieren eines skalierbaren Videodatenstroms, der mindestens ein nicht erforderliches Bild an einem zeitlichen Ort einer Schicht umfasst, wobei das Decodieren von Bildern in einer oberen Schicht an dem zeitlichen Ort und ihm in der Decodierungsreihenfolge nachfolgend das nicht erforderliche Bild nicht erfordert; und
Mittel zum Einbeziehen von Angabeinformationen des mindestens einen nicht erforderlichen Bilds in den skalierbaren Videodatenstrom, wobei die Angabeinformationen angeben, dass das mindestens eine nicht erforderliche Bild für das Decodieren von Bildern in einer oberen Schicht an dem zeitlichen Ort und ihm in der Decodierungsreihenfolge nachfolgend nicht erforderlich ist.

10. Videocodierer nach Anspruch 9, wobei die Informationen des mindestens einen nicht erforderlichen Bilds angeordnet sind, um innerhalb eines Abschnitts des skalierbaren Datenstroms signalisiert zu werden.

11. Videocodierer nach Anspruch 10, wobei die Informationen des mindestens einen nicht erforderlichen Bilds angeordnet sind, um in einer Supplemental Enhancement Information (SEI) Nachricht signalisiert zu werden.

12. Videodecodierer zum Decodieren eines skalierbaren Videodatenstroms, der eine Basisschicht und mindestens eine Anreicherungsschicht umfasst, wobei der Videodecodierer Folgendes umfasst:
Mittel zum Decodieren von mit einem skalierbaren Videodatenstrom empfangenen Decodierungsangabeinformationen, wobei die Angabeinformationen Informationen über mindestens ein nicht erforderliches Bild an einem zeitlichen Ort einer Schicht umfassen und angeben, dass das mindestens eine nicht erforderliche Bild für das Decodieren von Bildern in einer oberen Schicht an dem zeitlichen Ort und ihm in der Decodierungsreihenfolge nachfolgend nicht erforderlich ist; und
Mittel zum Decodieren von Bildern in einer Schicht über dem nicht erforderlichen Bild an dem zeitlichen Ort und ihm in der Decodierungsreihenfolge nachfolgend ohne Decodieren des nicht erforderlichen Bilds.

13. Videodecodierer nach Anspruch 12, wobei die Angabeinformationen angeordnet sind, um von einem Abschnitt des skalierbaren Datenstroms decodiert zu werden.

14. Videodecodierer nach Anspruch 13, wobei die Angabeinformationen angeordnet sind, um von einer Supplemental Enhancement Information (SEI) Nachricht decodiert zu werden.

15. Computerprogrammprodukt, das auf einem maschinenlesbaren Träger gespeichert und in einer Datenverarbeitungsvorrichtung ausführbar ist, um einen skalierbaren Videodatenstrom zu codieren, der eine Basisschicht und mindestens eine Anreicherungsschicht umfasst, wobei das Computerprogrammprodukt Folgendes umfasst:
einen Computerprogrammcodeabschnitt zum Codieren eines skalierbaren Videodatenstroms, der mindestens ein nicht erforderliches Bild an einem zeitlichen Ort einer Schicht umfasst, wobei das Decodieren von Bildern in einer oberen Schicht an dem zeitlichen Ort und ihm in der Decodierungsreihenfolge nachfolgend das nicht erforderliche Bild nicht erfordert; und
einen Computerprogrammcodeabschnitt zum Einbeziehen von Angabeinformationen des mindestens einen nicht erforderlichen Bilds in den skalierbaren Videodatenstrom, wobei die Angabeinformationen angeben, dass das mindestens eine nicht erforderliche Bild für das Decodieren von Bildern in einer oberen Schicht an dem zeitlichen Ort und ihm in der Decodierungsreihenfolge nachfolgend nicht erforderlich ist.

16. Computerprogrammprodukt, das auf einem maschinenlesbaren Träger gespeichert und in einer Datenverarbeitungsvorrichtung ausführbar ist, um einen skalierbaren Videodatenstrom zu decodieren, der eine Basisschicht und mindestens eine Anreicherungsschicht umfasst, wobei das Computerprogrammprodukt Folgendes umfasst:
einen Computerprogrammcodeabschnitt zum Decodieren von mit einem skalierbaren Videodatenstrom empfangenen Decodierungsangabeinformationen, wobei die Angabeinformationen Informationen über mindestens ein nicht erforderliches Bild an einem zeitlichen Ort einer Schicht umfassen und angeben, dass das mindestens eine nicht erforderliche Bild für das Decodieren von Bildern in einer oberen Schicht an dem zeitlichen Ort und ihm in der Decodierungsreihenfolge nachfolgend nicht erforderlich ist; und
einen Computerprogrammcodeabschnitt zum Decodieren von Bildern in einer Schicht über dem nicht erforderlichen Bild an dem zeitlichen Ort und ihm in der Decodierungsreihenfolge nachfolgend ohne Decodieren des nicht erforderlichen Bilds.

17. Datenstruktur, die einen skalierbaren Videodatenstrom ausführt, der Folgendes umfasst:
eine Basisschicht von Videodaten;
mindestens eine Anreicherungsschicht von Videodaten;
mindestens ein nicht erforderliches Bild an einem zeitlichen Ort einer Schicht, wobei das nicht erforderliche Bild zum Decodieren von Zielbildern in einer oberen Schicht an dem zeitlichen Ort und ihm in der Decodierungsreihenfolge nachfolgend nicht erforderlich ist; und
Angabedaten, die das mindestens eine nicht erforderliche Bild identifizieren, wobei die Angabedaten angeben, dass das mindestens eine nicht erforderliche Bild zum Decodieren von Bildern in einer oberen Schicht an dem zeitlichen Ort und ihm in der Decodierungsreihenfolge nachfolgend nicht erforderlich ist.

18. Datenstruktur nach Anspruch 17, wobei die Angabedaten Folgendes umfassen:
eine erste Angabe von mindestens einem Zielbild;
eine zweite Angabe von mindestens einem nicht erforderlichen Bild für das Zielbild; und
eine dritte Angabe eines Qualitätsniveaus des mindestens einen nicht erforderlichen Bilds.

19. Datenstruktur nach Anspruch 17, wobei die Angabedaten einem Abschnitt des skalierbaren Datenstroms als eine Supplemental Enhancement Information (SEI) Nachricht zugehörig sind.

## Revendications

1. Procédé de codage d'un flux de données vidéo échelonnable comprenant une couche de base et au moins une couche d'amélioration, le procédé comprenant les étapes suivantes consistant à :
coder un flux de données vidéo échelonnable, qui comprend au moins une image non requise dans une localisation temporelle d'une couche dans lequel l'étape consistant à décoder des images dans une couche supérieure, au niveau de, et suivant ladite localisation temporelle dans l'ordre de décodage ne nécessite pas ladite image non requise ; et
signaler des informations d'indication de ladite au moins une image non requise dans le flux de données vidéo échelonnable, les informations d'indication indiquant que ladite au moins une image non requise n'est pas requise pour décoder des images dans une couche supérieure, au niveau de, et suivant la ladite localisation temporelle dans l'ordre de décodage.

2. Procédé selon la revendication 1, dans lequel lesdites une ou plusieurs couches d'amélioration comprennent une ou plusieurs couches d'amélioration spatiale, de la qualité, ou d'échelonnage à granularité fine (FGS).

3. Procédé selon la revendication 1, dans lequel ladite étape consistant à signaler est réalisée au sein d'une partie dudit flux de données échelonnable.

4. Procédé selon la revendication 3, dans lequel ladite étape consistant à signaler est réalisée dans un message d'information d'amélioration supplémentaire (SEI).

5. Procédé de décodage d'un flux de données vidéo échelonnable comprenant une couche de base et au moins une couche d'amélioration, le procédé comprenant les étapes suivantes consistant à :
décoder des informations d'indication reçues avec une flux de données vidéo échelonnable, lesdites informations d'indication comprenant des informations concernant au moins une image non requise dans une localisation temporelle d'une couche et indiquant que ladite au moins une image non requise n'est pas nécessaire pour décoder des images dans une couche supérieure, au niveau de, et suivant la localisation temporelle dans l'ordre de décodage, et
décoder des images dans une couche au-dessus de l'image non requise, au niveau de, et suivant ladite localisation temporelle dans l'ordre de décodage sans décoder ladite image non requise.

6. Procédé selon la revendication 5, dans lequel lesdites une ou plusieurs couches d'amélioration comprennent une ou plusieurs couches d'amélioration spatiale, de la qualité, ou d'échelonnage à granularité fine (FGS).

7. Procédé selon la revendication 5, dans lequel lesdites informations d'indication sont reçues au sein d'une partie dudit flux de données échelonnable.

8. Procédé selon la revendication 7, dans lequel lesdites informations d'indication sont reçues dans un message d'information d'amélioration supplémentaire (SEI).

9. Codeur vidéo permettant de coder un flux de données vidéo échelonnable comprenant une couche de base et au moins une couche d'amélioration, le codeur vidéo comprenant :
des moyens pour coder un flux de données vidéo échelonnable, qui comprend au moins une image non requise dans une localisation temporelle d'une couche dans lequel l'étape consistant à décoder des images dans une couche supérieure, au niveau de, et suivant ladite localisation temporelle dans l'ordre de décodage ne nécessite pas ladite image non requise ; et
des moyens pour inclure des informations d'indication de ladite au moins une image non requise dans le flux de données vidéo échelonnable, les informations d'indication indiquant que ladite au moins une image non requise n'est pas nécessaire pour décoder des images dans une couche supérieure, au niveau de, et suivant ladite localisation temporelle dans l'ordre de décodage.

10. Codeur vidéo selon la revendication 9, dans lequel des informations de ladite au moins une image non requise sont agencées pour être signalées au sein d'une partie dudit flux de données échelonnable.

11. Codeur vidéo selon la revendication 10, dans lequel des informations de ladite au moins une image non requise sont agencées pour être signalées dans un message d'information d'amélioration supplémentaire (SEI).

12. Décodeur vidéo permettant de décoder un flux de données vidéo échelonnable comprenant une couche de base et au moins une couche d'amélioration, le décodeur vidéo comprenant :
des moyens pour décoder des informations d'indication reçues avec un flux de données vidéo, lesdites informations d'indication comprenant des informations concernant au moins une image non requise dans une localisation temporelle d'une couche et indiquant que ladite au moins une image non requise n'est pas requise pour décoder des images dans une couche supérieure, au niveau de, et suivant ladite localisation temporelle dans l'ordre de décodage,
et
des moyens pour décoder des images dans une couche au-dessus de l'image non requise, au niveau de, et suivant ladite localisation temporelle dans l'ordre de décodage sans décoder ladite image non requise.

13. Décodeur vidéo selon la revendication 12, dans lequel lesdites informations d'indication sont agencées pour être décodées à partir d'une partie dudit flux de données échelonnable.

14. Décodeur vidéo selon la revendication 13, dans lequel lesdites informations d'indication sont agencées pour être décodées à partir d'un message d'information d'amélioration supplémentaire (SEI).

15. Produit de programme informatique, stocké sur un support lisible par ordinateur et exécutable dans un dispositif de traitement de données, permettant de coder un flux de données vidéo échelonnable comprenant une couche de base et au moins une couche d'amélioration, le produit programme d'ordinateur comprenant :
une section de code de programme informatique permettant de coder un flux de données vidéo échelonnable, qui comprend au moins une image non requise dans une localisation temporelle d'une couche dans lequel l'étape consistant à décoder des images dans une couche supérieure, au niveau de, et suivant ladite localisation temporelle dans l'ordre de décodage ne requière pas ladite image requise, et
une section de code de programme informatique permettant d'inclure des informations d'indication de ladite au moins une image non requise dans le flux de données vidéo échelonnable, les informations d'indication indiquant que ladite au moins une image non requise n'est pas nécessaire pour décoder des images dans une couche supérieure, au niveau de, et suivant ladite localisation temporelle dans l'ordre de décodage.

16. Produit de programme informatique, stocké sur un support lisible par ordinateur et exécutable dans un dispositif de traitement de données, permettant de décoder un flux de données vidéo échelonnable comprenant une couche de base et au moins une couche d'amélioration, le produit de programme informatique comprenant :
une section de code de programme informatique permettant de décoder des informations d'indication reçues avec un flux de données vidéo échelonnable, lesdites informations d'indication comprenant des informations concernant au moins une image non requise dans une localisation temporelle d'une couche et indiquant que ladite au moins une image non requise n'est pas requise pour décoder des images dans une couche supérieure, au niveau de, et suivant ladite localisation temporelle dans l'ordre de décodage ; et
une section de code de programme informatique permettant de décoder des images dans une couche au dessus de l'image non requise, au niveau de, et suivant ladite localisation temporelle dans l'ordre de décodage, sans décoder ladite image non requise.

17. Structure de données mettant en oeuvre un flux de données vidéo échelonnée comprenant :
une couche de base de données vidéo ;
au moins une couche d'amélioration de données vidéo ;
au moins une image non requise dans une localisation temporelle d'une couche, laquelle image non requise n'est pas nécessaire pour décoder des images cibles dans une couche supérieure, au niveau de, et suivant ladite localisation temporelle dans l'ordre de décodage ; et
des données d'indication identifiant ladite au moins une image non requise, les données d'indication indiquant que ladite au moins une image non requise n'est pas nécessaire pour décoder des images dans une couche supérieure, au niveau de, et suivant ladite localisation temporelle dans l'ordre de décodage.

18. Structure de données selon la revendication 17, dans lequel lesdites données d'indication comprennent :
une première indication d'au moins une image cible ;
une seconde indication d'au moins une image non requise pour ladite image cible ; et
une troisième indication d'un niveau de la qualité de ladite au moins une image non requise .

19. Structure de données selon la revendication 17, dans lequel lesdites données d'indication sont associées à une partie dudit flux de données échelonnable en tant que message d'information d'amélioration supplémentaire (SEI).
